# EUROPEAN PATENT APPLICATION

(11) **EP 2 306 550 A1**
(43) Date of publication of application: **06.04.2011**
(21) Application number: 09012081.7
(22) Date of filing: 23.09.2009
(51) Int. Cl.: H01M 2/10, H01M 10/44, H01M 10/46, H02J 7/00

(54) **Flashlight battery charger**

(71) Applicant: Liu, Yunzhao, Nantou Zhongshan Guangdong 528427 (CN)
(72) Inventor: Liu, Yunzhao, Nantou Zhongshan Guangdong 528427 (CN)
(74) Representative: Pereira Toña, Maria Irache

(57) **Abstract**

A flashlight battery charger is revealed. The flashlight battery charger mainly includes a rechargeable battery with a socket mounted in a flashlight and a charger. The rechargeable battery is charged by the socket connected with a city power system. After completing charging, the rechargeable battery is connected with various electronic products by the charger plugged into the socket so as to charge the electronic products. Thus the power in the rechargeable battery is not only provided to the flashlight for but is also provided to charge the electronic products. Moreover, the flashlight battery charger is portable so that it can be directly used to charge the electronic products to the maximum capacity and the inconvenience caused by no power source for electronic products is avoided. Therefore, the flashlight battery charger has more practical values.

## Description

### BACKGROUND OF THE INVENTION

### 1. Fields of the invention

The present invention relates to a flashlight battery charger, especially to a flashlight battery charger that includes at least one rechargeable battery mounted in a flashlight so as to charge other electronic devices to maximum capacity. The flashlight battery charger is portable and is used to charge the electronic device directly when power in batteries of the electronic device is mostly consumed so as to avoid the inconvenience caused by no power source available. The flashlight battery charger has more applications, not only for illumination of the flashlight, but also charging the connected electronic product to the maximum capacity.

### 2. Descriptions of Related Art

The fast development of modern technology has great impact on essential components present in our daily lives. One of the most common examples is an electronic device. By power sources available around us, the electronic devices bring tremendous convenience to our life and become one of daily essentials. To facilitate easy carrying of the electronic devices, most of them are mounted with rechargeable batteries for power supply.

However, although the rechargeable batteries can be recharged to full power again, a problem is raised when users go out and there is no city power available. Once power in the rechargeable batteries is run out, the electronic devices are unable to work. Thus there is still a space for improvement.

### SUMMARY OF THE INVENTION

Therefore it is a primary object of the present invention to provide a flashlight battery charger.

In order to achieve above object, the flashing battery charger includes a flashlight, at least one rechargeable battery mounted in the flashlight and a charger. A socket is disposed on a rechargeable battery of a flashlight and is connected with a city power system for charging the rechargeable battery. After completing the battery charging, users can not only use the present invention to make the flashlight light up, but also plug a charger into the socket of the rechargeable battery. By an output terminal on the other end of the charger directly connected with various electronic products or connected with various electronic products by adaptors, power in the rechargeable battery is boosted by a boost unit in the charger so as to charge the connected electronic products to a level of full capacity. The flashlight battery charger is portable and easy to carry. After power in the battery of the electronic product being consumed mostly, the battery in the flashlight is used directly or is taken out of the flashlight for charging the electronic product to its maximum capacity. Thus the inconvenience caused by no power supply for electronic products can be avoided. The present invention has more practical values.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of an embodiment according to the present invention;
Fig. 2 is an explosive view of a flashlight according to the present invention;
Fig. 3 is an explosive view of a rechargeable battery according to the present invention;
Fig. 4 is a schematic drawing showing circuitry of a boost unit according to the present invention;
Fig. 5 is a schematic drawing showing a use state of an embodiment according to the present invention;
Fig. 6 is a schematic drawing showing a use state of another embodiment according to the present invention;
Fig. 7 is an explosive view of a further embodiment according to the present invention;
Fig. 8 is an end view showing a use state of the embodiment in Fig. 7;
Fig. 9 is a partial cross sectional view of a further embodiment according to the present invention;
Fig. 10 is a partial cross sectional view of a further embodiment according to the present invention;
Fig. 11 is a partial cross sectional view of a further embodiment according to the present invention;
Fig. 12 is a schematic drawing showing a use state of a further embodiment according to the present invention.

### DETAILED DESCRIPTION OF THE PREFERRED EMBODIMENT

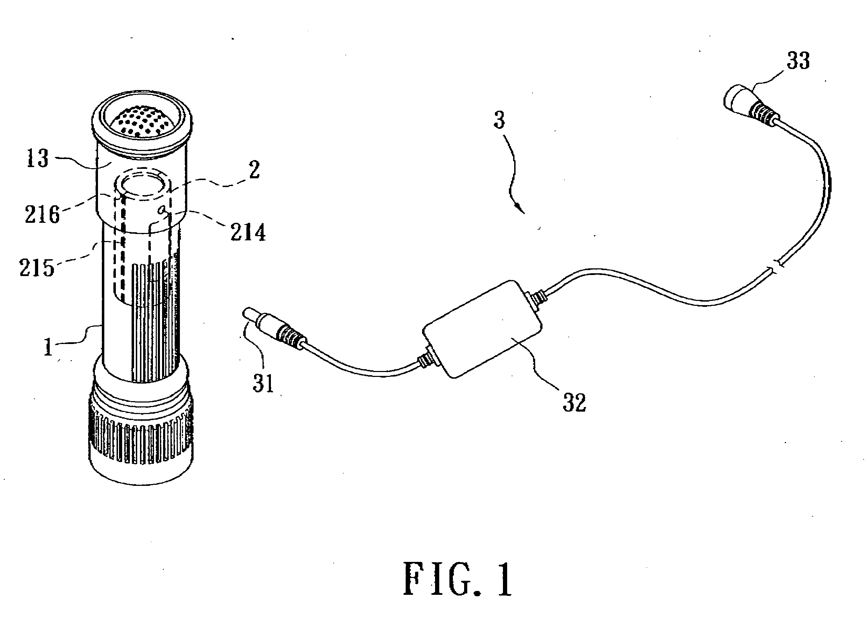

Refer to Fig. 1, a flashlight charger of the present invention includes a flashlight 1, at least one rechargeable battery 2 mounted in the flashlight 1, and a charger 3.

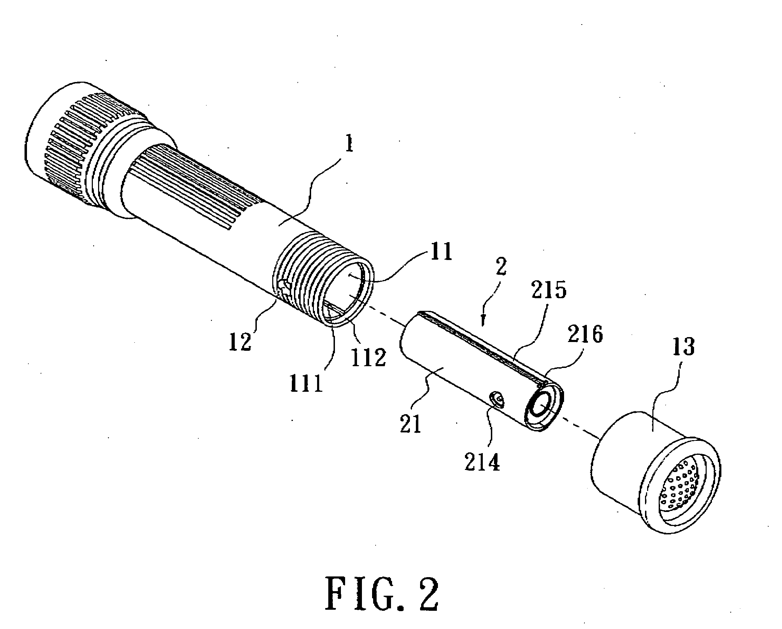

Also refer to Fig. 2, the flashlight 1 includes a battery mounting space 11 for receiving the rechargeable battery 2, a locking slot 111 disposed on an inner edge of the battery mounting space 11, a step-iike edge 112 formed on an outer edge of the battery mounting space 11 and corresponding to the locking slot 111, a through hole 12 disposed on a side edge of the flashlight 1, and a cover 13. After the rechargeable battery 2 being received in the battery mounting space 11, the cover 13 is covered and fixed on the flashlight 1.

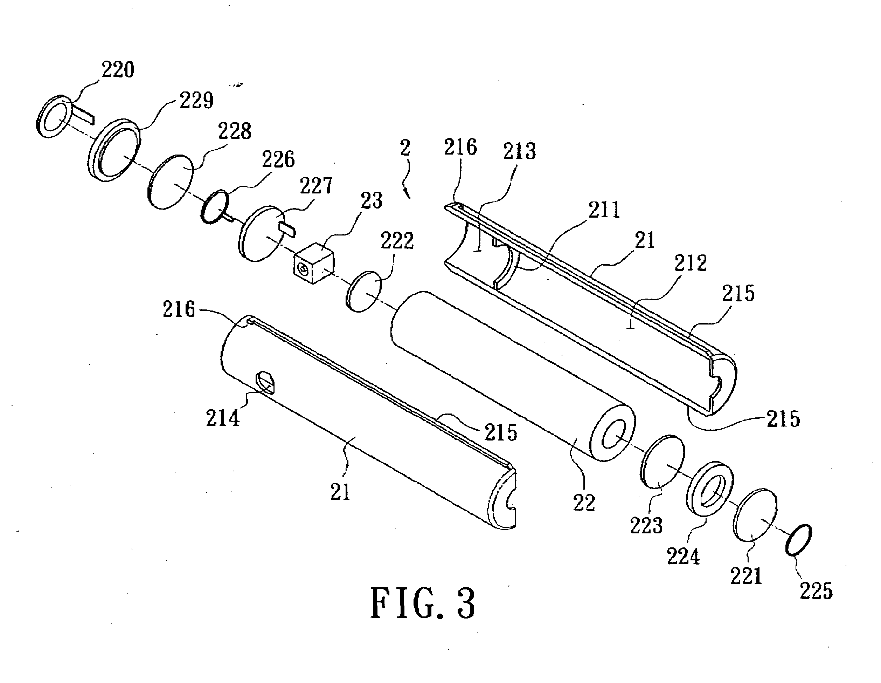

Refer to Fig. 3, an explosive view of the rechargeable battery 2 is revealed. The rechargeable battery 2 includes a left housing and a right housing 21, corresponding to each other. A space inside the left housing and the right housing 21 is divided into a battery receiving slot 212 and a plug receiving slot 213 by a dividing rib 211. The battery receiving slot 212 is to load at least one power storage unit 22. The power storage unit 22 can be a single one or a plurality of power storage units 22 connected in series according to the power it supplies. A charge-discharge protection circuit 221 is electrically connected with a positive electrode and a negative electrode of the power storage unit 22, and a socket 23. Then a washer 222, the power storage unit 22, a pad 223, a foam washer 224, the charge-discharge protection circuit 221 and a positive electrode plate 225 are put into a space inside the battery receiving slot 212. The socket 23, a positive electrode 226, an electrode holder 227, a sticker 228, a negative electrode holder 229 and a negative electrode 220 are mounted into the plug receiving slot 213. The negative electrode 220 is fixed in the negative electrode holder 229 and the positive electrode 226 is fixed in the electrode holder 227. Then the negative electrode holder 229 and the electrode holder 227 are attached with each other by the sticker 228 therebetween. An opening of the socket 23 just faces a socket hole 214 of the left housing and the right housing 21. A gap between the dividing ribs 211 of the left housing and a right housing 21 allows wires that connect socket 23 with the power storage unit 22 as well as the charge-discharge protection circuit 221 to pass through. In order to save the space, that wires are used. After corresponding components being set into the battery receiving slot 212 and the plug receiving slot 213, the left housing and the right housing 21 is welded by an ultrasonic welding machine. The positive electrode plate 225 is exposed through a hole on the right end of the left housing and the right housing 21 while the negative electrode 220 is exposed through a hole on the left end of the left housing and the right housing 21. Moreover, a projecting mounting rib 215 is disposed on an outer edge of the left housing and the right housing 21, corresponding to the locking slot 111 on an inner edge of the battery mounting space 11 of the flashlight 1. A stopping flange 216 is formed on an outer end of the projecting mounting rib 215, corresponding to the step-like edge 112 formed on the outer edge of the battery mounting space 11. Thus the projecting mounting rib 215 on the outer edge of the left housing and the right housing 21 and the locking slot 111 disposed on the inner edge of the battery mounting space 11 are located and locked with each other when the rechargeable battery 2 is loaded into the battery mounting space 11 of the flashlight 1. Meanwhile by the limit of the stopping flange 216 corresponding to the step-like edge 112 formed on the outer edge of the battery mounting space 11, the rechargeable battery 2 is loaded into the battery mounting space 11 only in a single direction. Thus the battery electrodes arranged in the wrong direction can be avoided. The rechargeable battery 2 is located stably, without rotation, in the battery mounting space 11 of the flashlight 1 and the socket hole 214 of the rechargeable battery 2 corresponds to the through hole 12 disposed on the side edge of the flashlight 1 precisely.

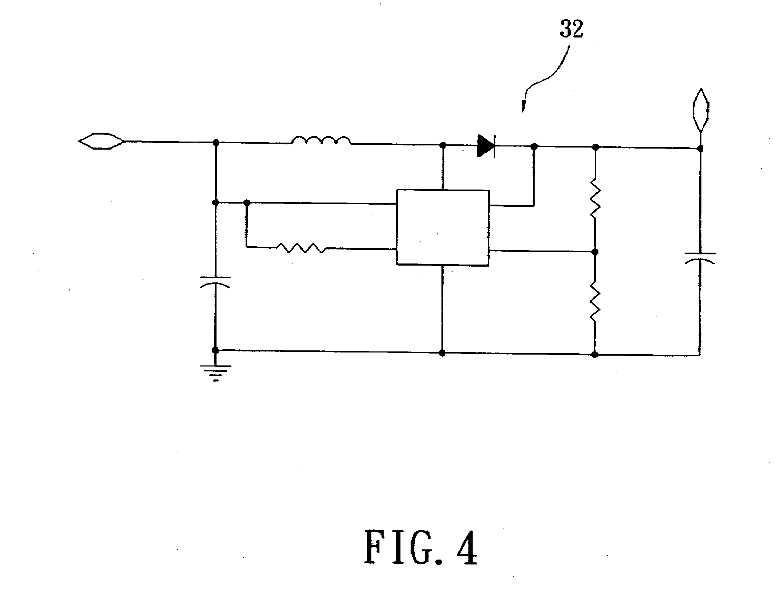

As to the socket 23 of the rechargeable battery 2 mounted in the flashlight 1, it can also be connected with an input terminal 31 of the charger 3. The charger 3 further includes a boost unit 32, as shown in Fig. 4, and an output terminal 33 on the other end thereof.

Thereby the socket 23 of the rechargeable battery 2 mounted in the flashlight 1 is connected with a city power system for charging the rechargeable battery 2. After the charging being completed, the rechargeable battery 2 can not only provide power to the flashlight 1 but also supply power to various electronic products by the input terminal 31 of the charger 3 connected with the socket 23 and the output terminal 33 on the other end of the charger 3 connected with the electronic products. The power in the rechargeable battery 2 of the flashlight 1 is boosted by the boost unit 32 of the charger 3 so as to charge the connected electronic products to the maximum capacity.

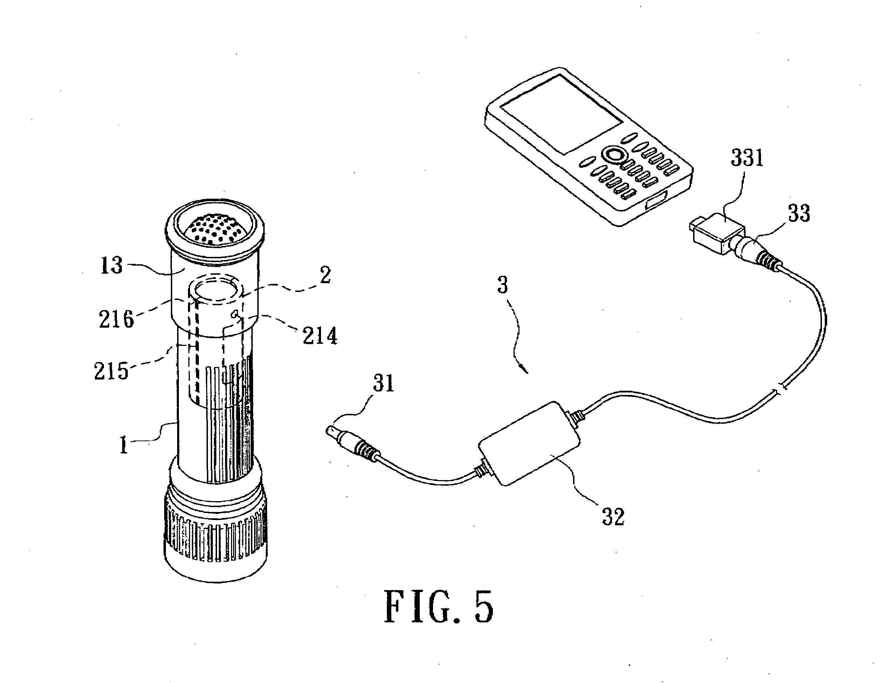

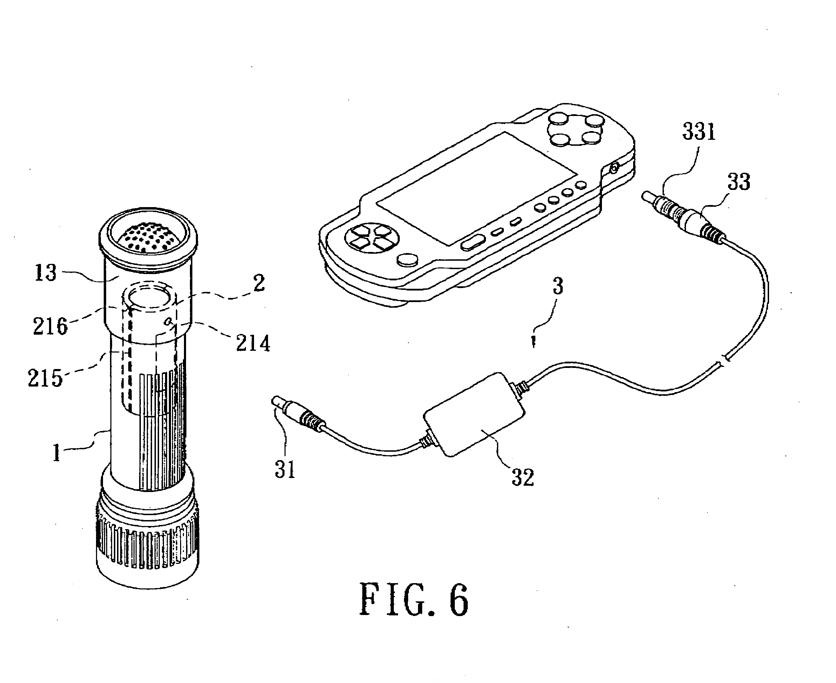

Moreover, refer to embodiments shown in Fig. 5 and Fig. 6, the output terminal 33 on the other end of the charger 3 is connected with various adaptors 331 according to different specifications of connectors of the electronic products so as to connect the present invention with the electronic products. Thus the electronic product connected is charged to its maximum capacity by the rechargeable battery 2 received in the flashlight 1.

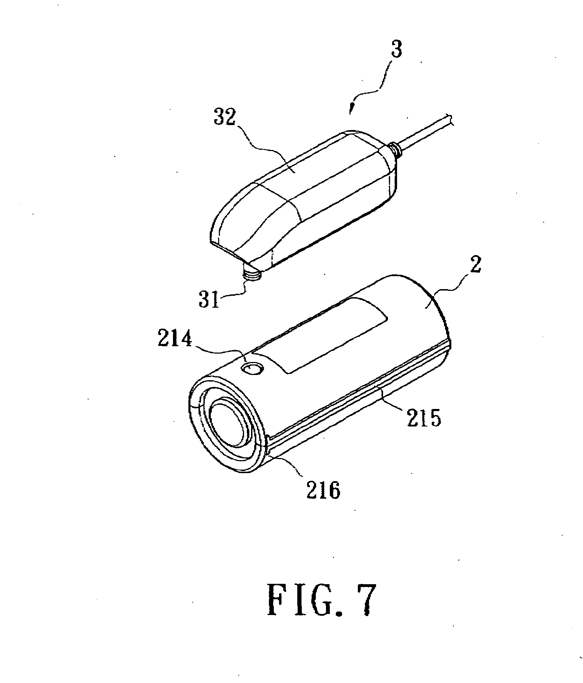

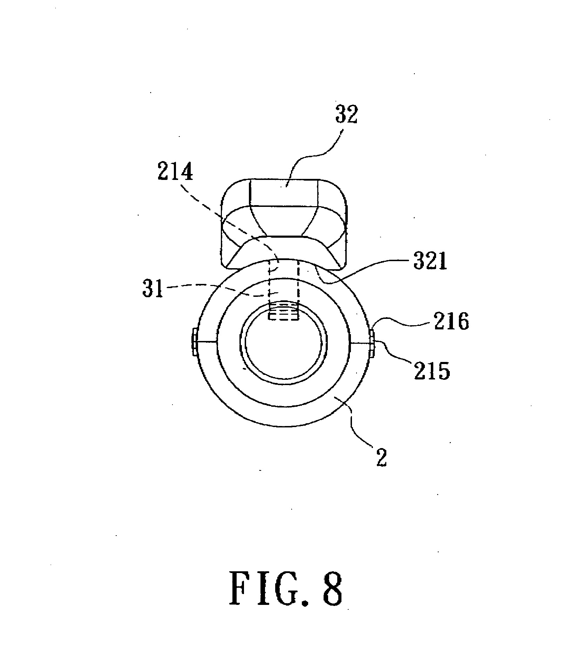

Furthermore, refer to Fig. 7 and Fig. 8, in the charger 3, the input terminal 31 is integrated with the boost unit 32 and an outer surface of a housing of the boost unit 32 is concavely arranged with a curved part 321 whose shape is corresponding to the rechargeable battery 2. Thus in use, the rechargeable battery 2 is released from the battery mounting space 11 of the flashlight 1 and the input terminal 31 of the charger 3 is directly plugged into and connected with the socket 23 correspondingly through the socket hole 214 of the rechargeable battery 2. Now the curved part 321 on the outer surface of the housing of the boost unit 32 is resting against the rechargeable battery 2 correspondingly. Similarly, the output terminal 33 on the other end of the charger 3 is plugged into and connected with various electronic products and the power in the rechargeable battery 2 is boosted by the boost unit 32 so as to charge the connected electronic product to the maximum capacity.

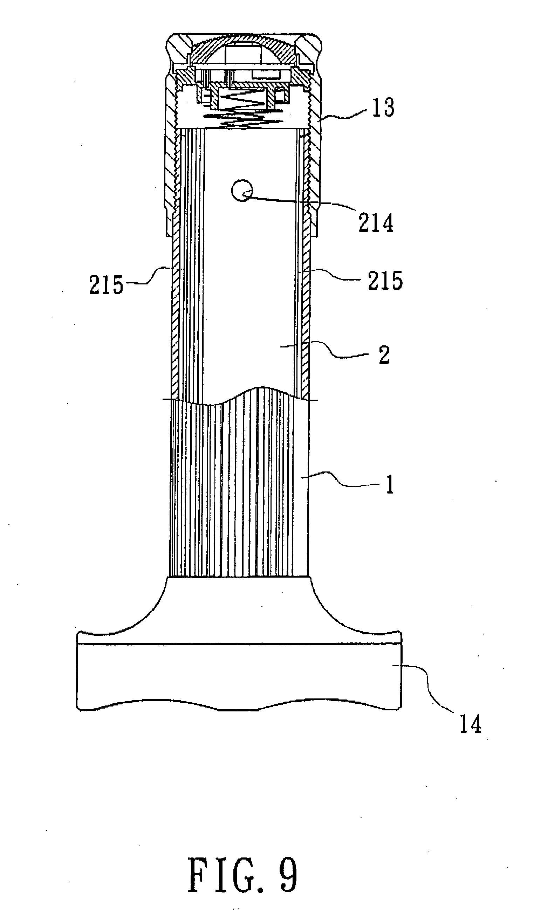

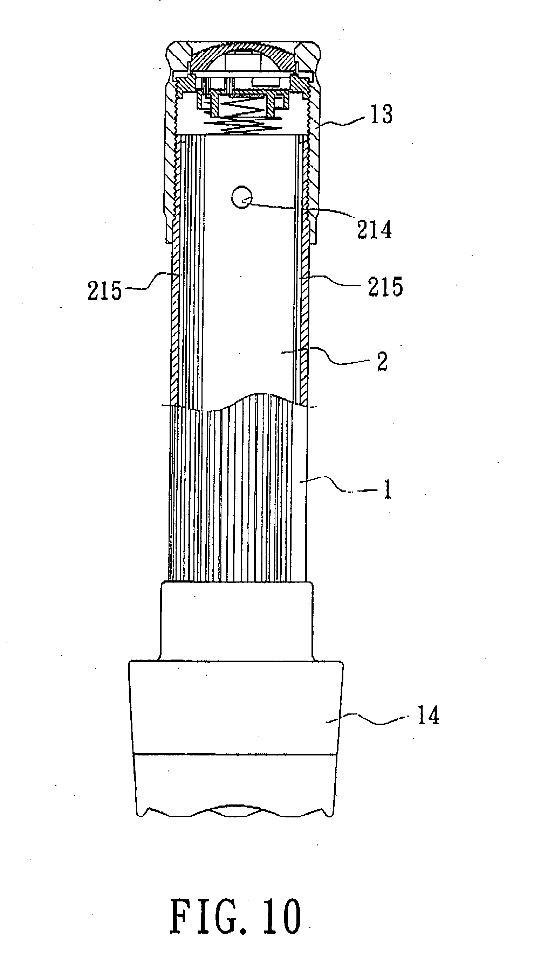

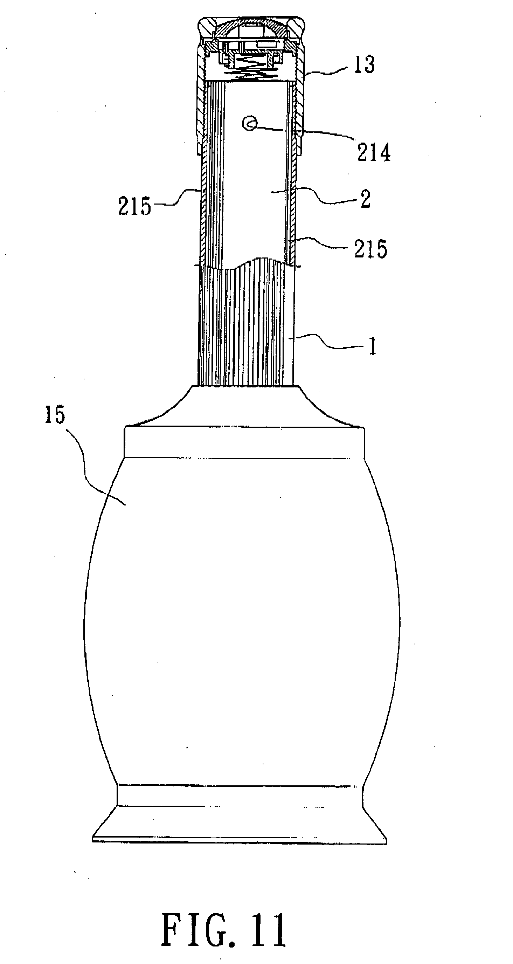

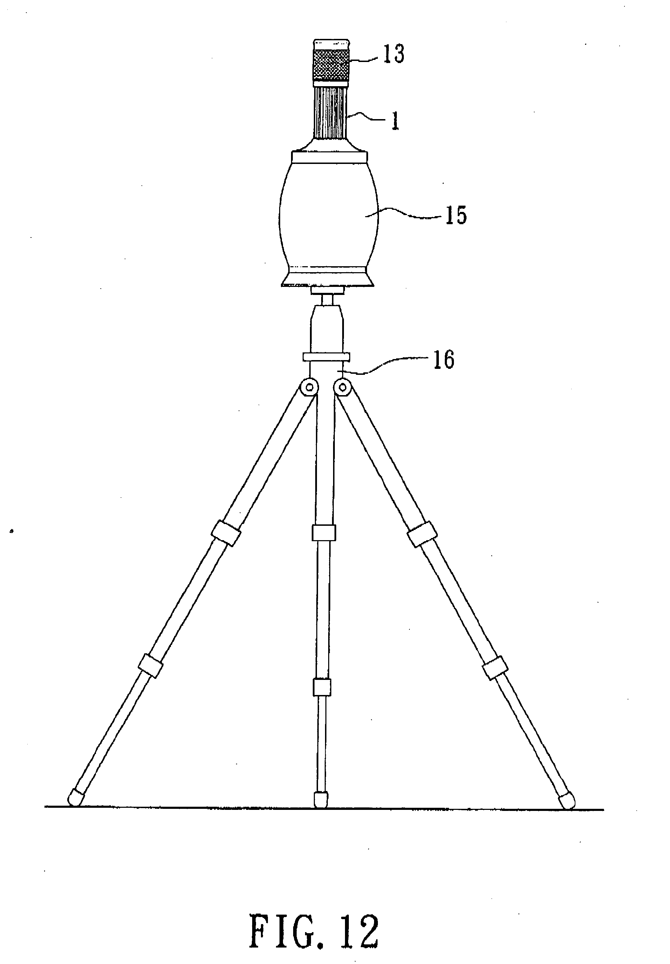

A light source 14 on a front end of the flashlight 1 can be changed according to users' requirements. For example, a light source for general illumination is used. Or as shown in Fig. 9, the light source 14 includes a large lighting area so as to achieve large area illumination. Or refer to Fig. 10, a front end of the light source 14 is disposed with a projecting part with a wave-like surface (convex and concave surfaces). The flashlight 1 is not only used for illumination but also working as outdoor survival/rescue equipment. The projecting part with the wave-like surface can be used to dig things or break fragile objects such as glass etc. Or when a car falls into water, it is difficult for passengers in the car to escape through the door due to the water pressure. Users can use the projecting part on the front end of the light source 14 to break the window out and escape. Refer to Fig. 11, an end of the flashlight 1 is covered by a hollow lamp shield 15 filled with air therein. Thus the device is not only used as a lighting device but is also put into water as a fishing light. Due to air filled inside the lamp shield 15, the device floats on water and light emitted therefrom attracts fishes. Thus the device is used as a fishing light for anglers to attract fish, providing illumination while fishing, or working as a distress light for people floating in the water. Refer to Fig. 12, the lamp shield 15 on the end of the flashlight is threaded with a tripod 16. By the tripod 16, the flashlight 1 is located and fixed on the ground for illumination.

In summary, compared with the devices available now, the present has following advantages:
1. After the rechargeable battery inside the flashlight charged completely, the rechargeable battery supplies power to the flashlight for illumination.
2. The rechargeable battery mounted inside the flashlight is disposed with the socket that connects with various electronic products directly or connects with them by different adaptors. Thus power in the rechargeable battery inside the flashlight is boosted by the boost unit in the charger so as to charge the connected electronic product fully.
3. The flashlight of the present invention is not only a portable lighting device for users but also is a power source. The rechargeable battery mounted in the flashlight is used to charge the electronic products directly when the power of the battery in the electronic product is run out so as to avoid the inconvenience caused by no power source for electronic products.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalents.

## Claims

1. A flashlight battery charger comprising a flashlight, at least one rechargeable battery mounted in the flashlight and a charger; wherein
the flashlight includes a battery mounting space for receiving the rechargeable battery, a locking slot arranged at an inner edge of the battery mounting space, a step-like edge formed on an outer edge of the battery mounting space and corresponding to the locking slot, and a through hole disposed on a side edge thereof;
the rechargeable battery includes a socket therein, a socket hole corresponding to an opening of the socket on an outer edge thereof, a projecting mounting rib disposed on an outer edge thereof and corresponding to the locking slot on the inner edge of the battery mounting space, and a stopping flange formed on an outer end of the projecting mounting rib and corresponding to the step-like edge on the outer edge of the battery mounting space; when the rechargeable battery is loaded into the battery mounting space of the flashlight, by the projecting mounting rib and the locking slot on the inner edge of the battery mounting space located and locked with each other and limit of the stopping flange corresponding to the step-like edge on the outer edge of the battery mounting space, the rechargeable battery is loaded into the battery mounting space only in a single direction and battery electrodes arranged in the wrong direction is avoided; the socket hole is precisely corresponding to the through hole on the side edge of the flashlight; and
the charger includes an input terminal that is plugged in and connected with the socket of the rechargeable battery in the flashlight, a boost unit therein, and an output terminal disposed on the other end thereof.

2. The device as claimed in claim 1, wherein the output terminal of the charger is connected with different adapters according to various specifications of the electronic products.

3. The device as claimed in claim 1, wherein the input terminal and the boost unit of the charger are integrated with each other and a curved part whose shape is corresponding to the rechargeable battery is arranged concavely at an outer surface of a housing of the boost unit; the input terminal is directly plugged in and connected with the socket correspondingly through the socket hole of the rechargeable battery after the rechargeable battery being released from the battery mounting space of the flashlight and the curved part on the outer surface of the housing of the boost unit is leaning against the rechargeable battery correspondingly.

4. The device as claimed in claim 1, wherein a light source is disposed on a front end of the flashlight and the light source includes a large lighting area so as to project light in a large area.

5. The device as claimed in claim 1, wherein a light source is disposed on a front end of the flashlight and an outer edge of a front end of the light source is disposed with a projecting part with a wave-like surface that is used to dig things, break fragile objects, or work as rescue equipment.

6. The device as claimed in claim 1, wherein an end of the flashlight is covered with a hollow lamp shield tilled with air therein os that the device is not only used as a lighting device but is also put into water as a fishing light for anglers to attract fish, providing illumination while fishing, or working as a distress light for people floating in the water when the device floats on water and light up due ue to air filled inside the lamp shield.

7. The device as claimed in claim 5, wherein the lamp shield on the end of the flashlight is threaded with a tripod and the device is located and fixed on the ground for illumination by the tripod.
